# FASCICULE DE BREVET EUROPEEN

(11) **EP 0 447 295 B1**
(45) Date de publication et mention de la délivrance du brevet: **24.08.1994**
(21) Numéro de dépôt: 91400603.6
(22) Date de dépôt: 05.03.1991
(51) Int. Cl.: G01K 7/18, G01K 13/02

(54) **Elément sensible à la temperature, et sonde de mesure comportant un tel élément**
Temperaturfühlerelement und Sonde mit einem solchen Element
Temperature sensing element and probe using such an element

(30) Priorité: 06.03.1990 FR 9002800
(43) Date de publication de la demande: 18.09.1991
(73) Titulaire: MATERIEL ET AUXILIAIRE DE SIGNALISATION ET DE CONTROLE POUR L'AUTOMATION - AUXITROL, F-92603 Asnières (FR)
(72) Inventeur: Bourigault, Raymond, F-75015 Paris (FR)
(74) Mandataire: Schrimpf, Robert

(56) Documents cités:
- FR-A- 858 810
- FR-A- 884 741
- FR-A- 1 294 690
- FR-A- 1 566 141
- TECHNISCHES MESSEN, vol. 54, no. 4, 1987, pages 130-140; H.J.A. KLAPPE: "Platin-Widerstandsthermometer für industrielle Anwendungen"
- PATENT ABSTRACTS OF JAPAN, vol. 6, no. 133 (P-129)[1011], 20 juillet 1982;& JP-A-57 56 728

## Description

La présente invention concerne les éléments sensibles à la température, et plus particulièrement les éléments permettant de réaliser des sondes de mesure capables de déterminer avec précision la température d'un fluide par mesure de la résistance ohmique d'un enroulement bobiné.

De tels éléments sensibles à la température doivent être capables de fonctionner sur des plages de températures très étendues (par exemple de - 250°C à + 700°C) et/ou dans un milieu agressif, tout en résistant le mieux possible aux chocs, aux vibrations, aux pressions, et aux forces d'écoulement. Il en est particulièrement ainsi pour des utilisations dans le domaine spatial, où l'on utilise des sondes de mesure pour déterminer la température d'un flux d'hydrogène liquide, ou d'oxyde liquide, ou encore de tout autre gaz liquéfié.

Les concepteurs de tels éléments sensibles à la température doivent ainsi faire face à des problèmes très délicats pour les questions d'isolement et de résistance mécanique. De plus, ils cherchent à réaliser des éléments présentant des temps de réponse aussi courts que possible (par exemple inférieurs à la seconde), et ce aussi bien pour une augmentation qu'une diminution de la température. Si l'on ajoute à cela la nécessité de pouvoir réaliser des éléments de faibles dimensions, c'est-à-dire quelques centimètres en longueur, et quelques millimètres en diamètre, il est aisé de constater combien les problèmes qui se posent sont difficiles à résoudre.

L'état de la technique est illustré par des éléments sensibles à la température du type comportant un mandrin allongé en céramique dans lequel passent longitudinalement au moins deux fils de raccordement non isolés (en général en platine) qui se raccordent à un bobinage bifilaire (en général également à fils de platine) enroulé sur la surface extérieure dudit mandrin, et un revêtement isolant en verre entourant le mandrin allongé et son bobinage bifilaire.

De tels éléments sensibles à la température sont largement utilisés, mais ils présentent cependant une vulnérabilité importante au niveau de la sortie des fils nus de raccordement hors de l'enrobage isolant.

On a proposé d'améliorer l'isolation des fils nus en platine pour les protéger, en les recouvrant d'une gaine isolante en matière plastique, par exemple en polytétrafluoréthylène.

Outre les limitations en température d'un tel système (en général de - 50°C à 300°C), il subsiste de toute façon un inconvénient majeur du fait de la présence de zones exposées des fils de raccordement sortant du revêtement isolant, entre le bord d'extrémité de ce revêtement et le bord des gaines de protection.

Il subsiste toujours un "plan sensible" au niveau de ces sorties, avec un risque de rupture en raison de la fragilité de cette zone qui peut être durement sollicitée mécaniquement (chocs, vibrations, pressions, forces d'écoulement), l'écrouissage des fils détériorant de toute façon les caractéristiques électriques de fils par modification de leur résistivité. Il va de soi que ces risques sont encore agravés lorsque l'élément sensible à la température baigne dans une atmosphère conductrice.

L'invention a pour objet de perfectionner les éléments sensibles à la température du type précité, en réalisant l'isolement des sorties de fil ainsi que la résistance mécanique au niveau de ces sorties.

L'invention a également pour objet de réaliser un élément sensible à la température capable de fonctionner sur des plages de température étendues, sans vulnérabilité des zones sensibles et présentant un temps de réponse très faible, pour un comportement en dynamique permettant une utilisation dans des conditions sévères, aussi bien aux basses températures (domaine spatial par exemple) qu'aux températures très élevées.

Il s'agit plus particulèrement d'un élément sensible à la température, comportant un mandrin allongé en céramique, dans lequel passent longitudinalement au moins deux fils de raccordement non isolés qui se raccordent à un bobinage bifilaire enroulé sur la surface extérieure dudit mandrin, et un revêtement isolant en verre entourant le mandrin allongé et son bobinage bifilaire, caractérisé par le fait qu'il comporte au moins un câble blindé à isolant minéral dont une extrémité est encastrée dans le mandrin allongé, et dans lequel ou lesquels passent les fils de raccordement, et par le fait que le revêtement isolant recouvre également la zone du ou des câbles blindés à isolant minéral qui est immédiatement adjacente à l'encastrement dans ledit mandrin allongé.

Selon un mode de réalisation particulier, le mandrin allongé en céramique présente au moins un alésage profond pour l'encastrement du ou des câbles blindés à isolant minéral ; en particulier, la longueur de l'alésage profond du mandrin allongé est au moins égale à deux fois le diamètre extérieur d'un câble blindé à isolant minéral. De préférence alors, l'extrémité encastrée du ou des câbles blindés à isolant minéral est scellée dans l'alésage profond du mandrin allongé.

Avantageusement, le ou chaque câble blindé à isolant minéral est essentiellement constitué par une gaine métallique renfermant un isolant, tel que la magnésie ou l'alumine, dans lequel sont noyés le ou les fils de raccordement associés. En particulier, la gaine du ou de chaque câble blindé à isolant minéral est en métal ou en un alliage métallique dont le coefficient de dilatation à la température est proche de celui de la céramique constituant le mandrin allongé et également proche de celui du revêtement isolant en verre de l'élément sensible à la température.

L'invention concerne également une sonde de mesure comportant un élément sensible à la température du type précité, caractérisée par le fait qu'elle présente un corps principal à extension tubulaire ajourée, ledit corps supportant l'élément sensible à la température par une entretoise traversée par le ou les câbles blindés à isolant minéral dudit élément, de telle façon que le bobinage bifilaire enrobé soit disposé dans ladite extension tubulaire ajourée.

Il est intéressant que la sonde de mesure comporte en outre deux patins élastiques de centrage assurant le maintien de la portion de l'élément sensible à la température qui est disposée dans l'extension tubulaire ajourée, dont un premier patin, traversé par le ou les câbles blindés à isolant minéral et interposé entre l'entretoise et l'extrémité adjacente du revêtement isolant de ladite portion, et un deuxième patin interposé entre l'autre extrémité dudit revêtement isolant et le fond de ladite extension tubulaire.

De préférence alors, un jeu est ménagé pour le passage du ou des câbles blindés à isolant minéral dans le premier patin, afin de permettre un certain débattement en flexion de l'élément sensible à la température.

Avantageusement, le corps principal présente un alésage central prolongeant celui de l'extension tubulaire ajourée, ledit alésage recevant l'entretoise et le premier patin de centrage.

Selon un mode de réalisation préféré, une liaison hermétique rigide, de préférence par brasure, est prévue entre l'entretoise et la gaine du ou des câbles blindés à isolant minéral, et d'autre part entre ladite entretoise et le corps principal. De préférence aussi, l'entretoise est métallique, alors que les patins élastiques de centrage sont en matière plastique, par exemple en polytétrafluoréthylène.

Selon une autre caractéristique avantageuse, l'alésage central débouche, du côté opposé à l'extension tubulaire ajourée, dans une chambre recevant les extrémités des fils de raccordement, ladite chambre étant obturée de façon étanche par un connecteur hermétique auquel sont raccordées lesdites extrémités ; en particulier, la chambre du corps principal reçoit un compound dans lequel sont noyées les brasures assurant la jonction des extrémités des fils de raccordement.

D'autres caractéristiques et avantages de l'invention apparaîtront plus clairement à la lumière de la description qui va suivre et du dessin annexé concernant un mode de réalisation particulier de l'invention, en référence aux figures où :
- la figure 1 est une vue en élévation d'un élément sensible à la température réalisé conformément à l'état de la technique, ici à deux fils de raccordement ;
- la figure 2 est une vue en perspective de cet élément connu, avec un arrachement permettant de mieux distinguer le bobinage bifilaire qui est enroulé autour du mandrin central en céramique ;
- la figure 3 est une vue en coupe de ce même élément, permettant de mieux distinguer les zones (notées X) du plan sensible évoqué plus haut ;
- la figure 4 est une vue en élévation d'un élément sensible à la température réalisé conformément à l'invention, ici à un seul câble blindé à isolant minéral dans lequel passent deux fils de raccordement, cette vue étant à rapprocher de celle de la figure 1 ;
- la figure 5 est une coupe de cet élément, permettant de mieux en distinguer la structure, en particulier l'enrobage de la zone du câble blindé à isolant minéral qui est immédiatement adjacente à l'encastrement de celui-ci dans le mandrin en céramique ;
- la figure 6 est une vue en coupe illustrant une sonde de mesure comportant un élément sensible à la température, conformément à un autre aspect de l'invention, et permettant d'en distinguer la structure, en particulier les moyens de support et de positionnement dudit élément sensible à la température.

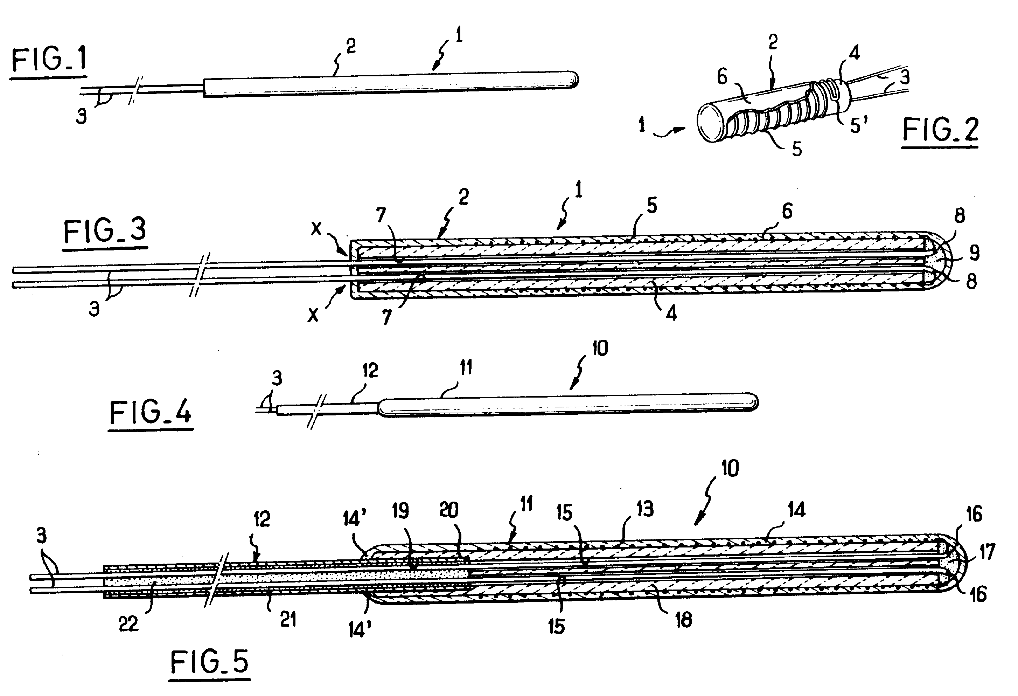

Les figures 1 à 3 illustrent un élément sensible à la température conforme à la technique antérieure, qui est ici à deux fils de raccordement (il existe en effet des éléments analogues à trois ou quatre fils de raccordement, mais dont le principe de fonctionnement est identique).

Cet élément 1 se présente sous la forme d'un corps allongé 2, duquel sortent deux fils 3 qui sont des fils de raccordement à un bobinage bifilaire intérieur audit corps allongé.

La figure 2 permet de distinguer un mandrin allongé en céramique 4, dans lequel passent longitudinalement les deux fils de raccordement non isolés 3, en général en platine, qui se raccordent à un bobinage bifilaire 5 également à fils de platine ; ce bobinage bifilaire est enroulé sur la surface extérieure du mandrin 4, le double enroulement à spires non jointives permettant de disposer l'entrée et la sortie dudit bobinage du même côté dudit élément, de sorte que l'on trouve une boucle 5′ en extrémité de ce bobinage bifilaire.

Un revêtement isolant en verre 6 entoure le mandrin allongé 4 et son bobinage bifilaire 5, pour assurer la tenue des fils et l'étanchéité de l'élément par rapport à l'extérieur.

La structure de cet élément sensible à la température conforme à la technique antérieure est mieux visible sur la coupe de la figure 3.

On constate sur cette figure que le mandrin allongé en céramique 4 présente deux canaux longitudinaux 7, permettant le passage des fils de raccordement non isolés en platine 3.

Les fils de raccordement 3 ressortent à l'autre extrémité du mandrin allongé 4, et sont alors raccordés, au moyen d'une soudure à l'arc ou d'une brasure 8, au bobinage bifilaire 5 qui est enroulé sur la surface extérieure du mandrin 4.

A titre indicatif, les fils de raccordement 3 non isolés en platine présentent habituellement un diamètre de l'ordre de un à deux dixièmes de millimètre, tandis que le bobinage bifilaire est constitué de fils de platine d'un diamètre de l'ordre du centième de millimètre.

Un bouchon isolant 9 est prévu au niveau des soudures de raccordement 8, afin d'assurer la liaison mécanique des fils en extrémité de l'élément sensible à la température.

Le revêtement isolant en verre 6 est prévu autour du mandrin allongé et du bobinage bifilaire, ce revêtement isolant assurant ainsi à la fois la tenue des fils et l'étanchéité de l'élément par rapport à l'extérieur.

La figure 3 permet de bien distinguer la zone de sortie des fils de raccordement 3 hors du manchon allongé en céramique 4, au niveau de laquelle le revêtement isolant entoure directement les fils nus en platine.

Ces deux zones, notées X sur la figure 3, constituent le "plan sensible" précédemment évoqué, au niveau duquel sont concentrés les principaux inconvénients exposés plus haut (fragilité mécanique des fils, avec risque de rupture et de détérioration des caractéristiques électriques, et vulnérabilité à l'atmosphère extérieure).

Les figures 4 et 5 illustrent un élément sensible à la température réalisé conformément à l'invention.

En se référant à la figure 4, on constate que l'élément 10 se présente sous la forme d'un corps allongé 11, ressemblant extérieurement au corps allongé de l'élément connu précédemment décrit, ce corps allongé étant toutefois ici prolongé par un câble blindé unique à isolant minéral 12, duquel sortent deux fils de raccordement 3. Ainsi que cela sera expliqué plus loin, l'élément conforme à l'invention peut comporter un câble blindé unique à isolant minéral dans lequel passent plus de deux (en général trois ou quatre) fils de raccordement, ou encore plusieurs câbles blindés à isolant minéral dans chacun desquels passe un fil unique de raccordement.

La structure de cet élément 10 sera mieux comprise en se référant à la coupe de la figure 5.

L'élément 10 présente une certaine parenté de structure avec l'élément 1 précédemment décrit, en ce sens qu'il comporte également un mandrin allongé en céramique 18, dans lequel passent longitudinalement les fils de raccordement non isolés 3 qui se raccordent à un bobinage bifilaire 13, bobinage qui est enroulé sur la surface extérieure dudit mandrin ; on retrouve également les soudures ou brasures 16 de jonction entre les fils de raccordement 3 et le bobinage bifilaire 13, et un bouchon isolant 17 protégeant cette zone de jonction. La partie avant de l'élément 10, c'est-à-dire la partie correspondant au raccordement au bobinage bifilaire 13, comporte également un revêtement isolant en verre 14 entourant le mandrin allongé et son bobinage bifilaire.

Les fils de raccordement 3 et ceux du bobinage bifilaire 13 pourront être réalisés en platine, en platine rhodié, en platine palladié, ou en tout autre alliage métallique approprié (par exemple en alliage d'argent ou de nickel).

Cependant ici, et conformément à une caractéristique essentielle de l'invention, l'élément 10 comporte un câble blindé à isolant minéral 12 dont une extrémité est encastrée dans le mandrin allongé en céramique 18, et dans lequel passent les fils de raccordement 3, et de plus le revêtement isolant 14 recouvre également la zone du câble blindé à isolant minéral 12 qui est immédiatement adjacente à l'encastrement de celui-ci dans ledit mandrin allongé.

La notion d'encastrement doit être ici comprise dans un sens large : l'extrémité du câble blindé à isolant minéral 12 peut en effet être reçue dans un alésage central du mandrin 18, sur toute la longueur de celui-ci, ou encore, comme illustré en figure 5, être reçue dans un alésage profond 19 pour un encastrement en extrémité du mandrin allongé 18.

Un encastrement concernant la longueur totale du mandrin allongé 18 est certes plus facile à réaliser dans la mesure où il est inutile d'usiner un alésage profond dans ledit mandrin ; cependant, le temps de réponse d'un tel élément sera nécessairement plus long. Ainsi, l'homme de l'art devra choisir le type d'encastrement en fonction des paramètres prioritaires concernés, l'emmanchement complet de l'extrémité du câble blindé à isolant minéral 12 procurant certes une plus grande résistance aux chocs et aux vibrations, mais avec des caractéristiques de réponse nettement moins intéressantes qu'avec un encastrement dans un alésage profond.

Le mandrin allongé en céramique 18 présente ainsi sur la figure 5 un alésage profond 19, dont la longueur doit cependant être suffisante pour obtenir une bonne tenue à la fatigue : de préférence, la longueur de l'alésage profond 19 sera au moins égale à deux fois le diamètre extérieur du câble blindé à isolant minéral 12.

L'extrémité encastrée du câble blindé à isolant minéral 12 s'étend ainsi jusqu'à l'épaulement 20 de l'alésage profond 19, et il est avantageux de prévoir une liaison par scellement dans cet alésage profond, par exemple au moyen de colles à base de verre spécial ou de tout autre ciment approprié.

Les fils de raccordement 3 traversent ainsi le câble blindé à isolant minéral 12, et en sortent pour pénétrer dans deux canaux allongés 15 du mandrin en céramique 18, ces canaux étant analogues aux canaux 7 de l'élément connu précédemment décrit.

Il est important de constater que le revêtement isolant 14 se prolonge vers l'arrière, selon une portion 14′ pour recouvrir également la zone du câble blindé à isolant minéral 12 qui est immédiatement adjacente à l'encastrement de celui-ci dans le mandrin allongé 18.

Ceci confère à l'élément 10 une isolation extrêmement satisfaisante au niveau de la sortie des fils de raccordement 3, en plus d'une tenue mécanique très avantageuse des fils à ce niveau.

Le revêtement isolant 14 est réalisé en verre spécial, à partir d'une pâte fondue à haute température, la température de fusion de ce verre étant naturellement supérieure à la température maximum de service de l'élément sensible à la température.

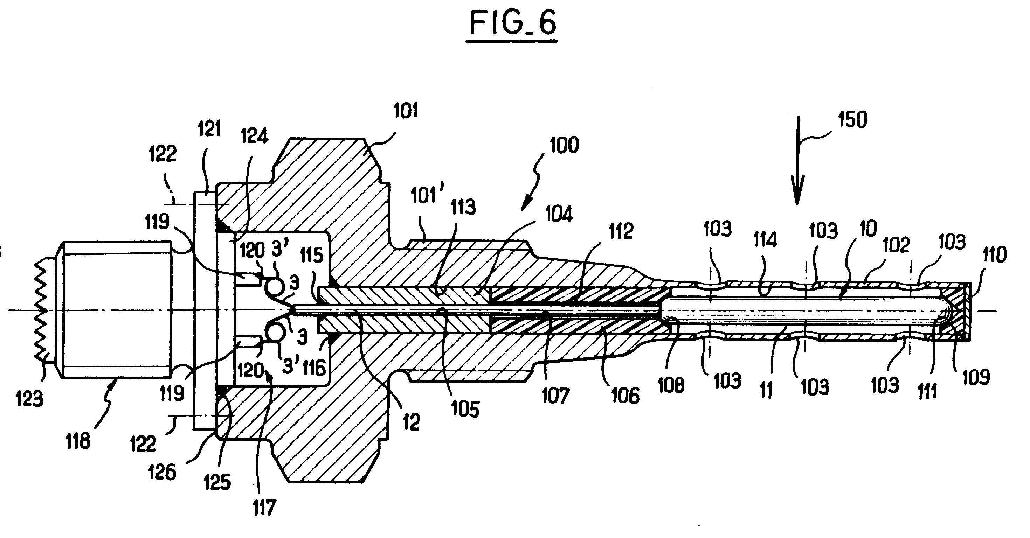

La longueur du câble blindé à isolant minéral 12 s'étendant au-delà du revêtement isolant 14 peut être théoriquement très longue, c'est-à-dire dépasser plusieurs mètres. Dans la pratique, cette longueur sera choisie en fonction des caractéristiques de montage de l'élément sensible à la température, ainsi par exemple que cela ressortira de la figure 6 où est illustré un tel montage dans une sonde de mesure.

Le câble blindé à isolant minéral 12 est de préférence essentiellement constitué par une gaine métallique 21 renfermant un isolant 22, tel que la magnésie, l'alumine, ou tout autre matériau isolant, dans lequel sont noyés les fils de raccordement 3.

Pour réaliser un tel câble blindé à isolant minéral, on utilisera de préférence une technique de rétreint à froid : selon cette technique, on enfile sur les fils de raccordement 3 une pluralité de perles réalisées dans la matière isolante sélectionnée, telle que la magnésie ou l'alumine par exemple, puis l'ensemble est inséré dans un tube métallique (qui constitue la gaine du câble terminé), ce tube métallique étant alors soumis à un martelage à froid qui a pour effet de réduire en poudre les perles enfilées sur les fils de raccordement, et de former ainsi un cylindre aggloméré de matière isolante dans lequel sont noyés lesdits fils de raccordement.

Il est intéressant de noter que le câble blindé à isolant minéral se comporte comme une poutre encastrée, avec une certaine liberté de flexion, tout en protégeant parfaitement les fils de raccordement qui sont à l'intérieur de celui-ci.

On est ainsi assuré d'éviter tout risque d'écrouissage des fils de raccordement 3 à leur sortie du mandrin en céramique, ce qui constitue un avantage très important au regard de la technique antérieure.

La gaine 21 du câble blindé à isolant minéral 12 est de préférence en métal ou en un alliage métallique dont le coefficient de dilatation à la température est proche de celui de la céramique constituant le mandrin allongé 18, et également proche du verre constituant le revêtement isolant 14 ; on pourra par exemple choisir une gaine en ferro-nickel.

A titre indicatif, le câble blindé à isolant minéral 12 présentera un diamètre extérieur de l'ordre du millimètre.

L'élément sensible à la température 10 ainsi réalisé peut être obtenu selon les étapes suivantes :
- on commence par réaliser le câble blindé à isolant minéral 12 duquel sortent les extrémités avant des fils de raccordement 3 ;
- on encastre l'extrémité du câble blindé à isolant minéral 12 dans l'alésage profond 19, jusqu'à buter contre l'épaulement 20 dudit alésage, et
- on procède à un scellage au niveau de cet encastrement ;
- on dispose le bobinage bifilaire sur la surface extérieure du mandrin en céramique 18, et
- on effectue les soudures de raccordement 16 ;
- on réalise le bouchon isolant 17 enrobant les soudures 16 précitées ;
- on réalise enfin le revêtement isolant en verre 14, dont la partie arrière 14′ vient alors recouvrir la zone du câble blindé à isolant minéral qui est immédiatement adjacente à l'encastrement de celui-ci dans le mandrin allongé 18.

Ainsi que cela a été dit plus haut, il est possible de prévoir que plus de deux fils de raccordement 3 passent dans le câble blindé à isolant minéral 12, c'est-à-dire en général trois ou quatre fils : dans ce cas, le mandrin 18 comporte un nombre correspondant de canaux 15, et les fils sont raccordés en 16 au bobinage bifilaire 13, de façon classique.

Il est également possible de prévoir plusieurs câbles blindés à isolant minéral 12, recevant chacun un ou deux fils de raccordement 3: par exemple, on pourra utiliser deux, trois, ou quatre câbles blindés recevant chacun un fil unique de raccordement. Dans ce cas, les câbles blindés à isolant minéral seront encastrés dans le mandrin allongé en céramique, et la partie de ces câbles extérieure au revêtement isolant 14 pourra être torsadée pour constituer une tresse de sortie ; l'encastrement sera alors effectué dans un alésage profond unique, ou dans des alésages profonds individuels.

L'élément sensible à la température qui vient d'être décrit peut être utilisé dans de nombreuses applications, et l'invention entend couvrir également une sonde de mesure particulière comportant un tel élément sensible à la température.

Une telle sonde de mesure va maintenant être décrite en se référant à la figure 6.

Conformément à l'invention, la sonde de mesure 100, comportant un élément sensible à la température 10 tel que précédemment décrit, présente un corps principal 101 à extension tubulaire ajourée 102, ledit corps supportant l'élément sensible à la température 10 par une entretoise 104 traversée par le câble blindé à isolant minéral 12 (ici unique) dudit élément, de telle façon que le bobinage bifilaire enrobé soit disposé dans ladite extension tubulaire ajourée.

L'extension tubulaire ajourée présente en effet une pluralité de trous 103, permettant au fluide environnant de lécher la surface extérieure du corps allongé 11 de l'élément sensible à la température 10.

Le nombre des trous 103 doit être choisi suffisamment grand pour que le fluide baigne correctement la portion active de l'élément sensible à la température, sans toutefois générer des efforts de flexion excessifs sur ledit élément.

Il convient toutefois de noter à ce titre que des moyens sont prévus pour assurer un parfait positionnement, tant longitudinal que transversal, du corps allongé 11 de l'élément sensible à la température, ce qui permet de procurer une résistance à la flexion très favorable, et donc d'autoriser des vitesses d'écoulement de fluide, selon la flèche 150, pouvant atteindre des valeurs très élevées, par exemple 170 m/s.

La sonde de mesure 100 comporte ainsi deux patins élastiques de centrage 106 et 109 assurant le maintien de la portion 11 de l'élément sensible à la température qui est disposé dans l'extension tubulaire ajourée 102.

On trouve tout d'abord un premier patin 106, traversé par le câble blindé à isolant minéral 12 dudit élément, et interposé entre l'entretoise 104 et l'extrémité adjacente du revêtement isolant de ladite portion 11.

Le deuxième patin 109 est quant à lui interposé entre l'autre extrémité du revêtement isolant et le fond 110 de l'extension tubulaire 102.

L'alignement du corps principal 11 de l'élément sensible à la température 10 est assuré en prévoyant un appui conique 108 sur le premier patin 106, et un appui conique 111 sur le deuxième patin 109.

On est ainsi assuré que l'élément sensible à la température 10 reste bien coaxial au corps de la sonde.

Ainsi que cela est visible sur la figure 6, un jeu 112 est par ailleurs ménagé pour le passage du câble blindé isolant minéral 12 dans le premier patin 106, afin de permettre un certain débattement en flexion de l'élément sensible à la température 10 sans risque de casser le revêtement isolant de l'élément.

Cette portion du câble blindé à isolant minéral 12 passant dans l'alésage central élargi 107 du patin 106, peut ainsi se déformer librement en flexion, entre ces deux encastrements d'extrémité.

Pour simplifier le montage, il est intéressant de prévoir que le corps principal 101 présente une alésage central 113 prolongeant celui 114 de l'extension tubulaire ajourée 102, cet alésage central 113 recevant l'entretoise 104 et le premier patin de centrage 106.

Le positionnement d'ensemble et l'herméticité sont assurés par une liaison hermétique rigide, de préférence par des brasures : on trouve ainsi une première brasure 115 entre l'entretoise 104 et la gaine du câble blindé à isolant minéral 12, et une deuxième brasure 116 entre ladite entretoise et le corps principal 101.

Il conviendra cependant de faire en sorte, pour la commodité du montage, que la deuxième brasure 116 ait un point de fusion inférieur à celui de la première brasure 115.

L'entretoise 104 est de préférence une douille métallique cylindrique, dont l'alésage central 105 reçoit l'extrémité arrière du câble blindé à isolant minéral 12. Les patins élastiques de centrage 106 et 109 sont quant à eux de préférence en matière plastique, par exemple en polytétrafluoréthylène.

Dans le cas évoqué plus haut, où l'élément sensible à la température comporte plusieurs câbles blindés à isolant minéral, la tresse de sortie qu'ils forment passe librement dans l'alésage élargi 107 du premier patin 106, puis passe dans l'alésage 105 de l'entretoise 104, et est enfin solidarisée à ladite entretoise par une brasure globale 115 concernant la gaine de chacun des câbles blindés à isolant minéral.

L'alésage central 113 débouche, du côté opposé à l'extension tubulaire ajourée 102, dans une chambre 117 du corps 101 recevant les extrémités 3′ des fils de raccordement 3.

Cette chambre est obturée de façon étanche par un connecteur hermétique 118 auquel sont raccordées les extrémités 3′ des fils de raccordement 3. Le connecteur hermétique 118 porte des queues de contact 119, en extrémité desquelles on réalise une brasure 120 pour la jonction de chacune des extrémités 3′ des fils de raccordement 3. La variante illustrée ici comporte deux extrémités 3′ puisqu'il y a deux fils de raccordement 3 : dans le cas où l'élément sensible à la température comporte plus de deux fils de raccordement 3, on trouve un nombre correspondant de brasures 120 et de queues de contact 119. Bien entendu, les extrémités 3′ des fils de raccordement peuvent être isolées individuellement, par exemple au moyen d'une gaine en polytétrafluoréthylène.

Le connecteur hermétique 118 comporte une bride d'appui 121, en arrière d'une bague de centrage 124 pénétrant dans la chambre 117, cette bride venant se visser sur le corps principal 101 de la sonde, comme symbolisé ici par les axes 122, en appui contre une facette annulaire 126 du corps 101.

On notera la présence d'un joint torique d'étanchéité 125, disposé entre la bague 124, la bride 121 et le corps 101.

Le connecteur hermétique 118 présente enfin, en partie arrière, des crans anti-rotation 123 pour le montage d'un connecteur mobile (non représenté ici), ainsi que cela est habituel dans cette technique.

L'élément sensible à la température 10 monté dans la sonde de mesure 100 est ainsi parfaitement tenu en place, tant longitudinalement que transversalement. La liberté de flexion du ou des câbles blindés à isolant minéral 12 dans sa portion intérieure au premier patin 106 évite toute création d'efforts de flexion dangereux au niveau de la sortie de ce ou ces câbles hors du revêtement isolant, qui auraient pu risquer de casser le verre constituant ledit isolant.

Il peut s'avérer avantageux de prévoir que la chambre 117 du corps principal 101 reçoive un compound isolant dans lequel sont noyées les brasures 120 assurant la jonction des extrémités 3′ des fils de raccordement. Un tel compound permet d'améliorer encore la tenue aux vibrations au niveau de ces extrémités. On pourra par exemple utiliser une colle classique dont la polymérisation intervient au bout de quelques minutes, afin de ne pas compliquer les opérations de montage.

L'assemblage de la sonde de mesure 100 peut être aisément effectué selon la succession des étapes suivantes :
- on commence par enfiler le premier patin 106 sur le câble blindé à isolant minéral 12 (ou la tresse de sortie si plusieurs câbles blindés à isolant minéral sont utilisés) de l'élément sensible à la température 10 ;
- on enfile ensuite l'entretoise métallique 104 ;
- on réalise alors la première brasure 115 entre l'entretoise 104 et la gaine extérieure du ou des câbles blindés à isolant minéral 12 ;
- on dispose le deuxième patin 109 contre le fond 110 de l'extension tubulaire ajourée 102, puis on enfile le sous-ensemble précédent par l'alésage central 113 du corps principal 101 ;
- on effectue alors la deuxième brasure 116 pour solidariser ce sous-ensemble au corps 101 et assurer l'herméticité ;
- on rapproche le connecteur hermétique 118 de sa position, afin d'effectuer les brasures de jonction 120 ;
- dans le cas où un compound est prévu dans la chambre 117, un tel compound est alors mis en place ;
- le connecteur hermétique 118 est enfin vissé sur le corps principal 101, et la sonde de mesure 100 est alors prête à l'emploi, cette sonde pouvant par exemple être vissée sur un support associé (non représenté ici) au moyen du filetage 101′ de son corps principal 101.

## Revendications

1. Element sensible à la température, comportant un mandrin (18) allongé en céramique, dans lequel passent longitudinalement au moins deux fils de raccordement non isolés (3) qui se raccordent à un bobinage bifilaire (13) enroulé sur la surface extérieure dudit mandrin (18), et un revêtement isolant (14) en verre entourant le mandrin allongé (18) et son bobinage bifilaire (13), caractérisé par le fait qu'il comporte au moins un câble blindé à isolant minéral (12) dont une extrémité est encastrée dans le mandrin allongé (18), et dans lequel ou lesquels passent les fils de raccordement (3), et par le fait que le revêtement isolant (14) recouvre également la zone du ou des câbles blindés à isolant minéral (12) qui est immédiatement adjacente à l'encastrement dans ledit mandrin allongé (18).

2. Element sensible à la température selon la revendication 1, caractérisé par le fait que le mandrin allongé en céramique (18) présente au moins un alésage profond (19) pour l'encastrement du ou des câbles blindés à isolant minéral ( 12).

3. Element sensible à la température selon la revendication 2, caractérisé par le fait que la longueur de l'alésage profond (19) du mandrin allongé (18) est au moins égale à deux fois le diamètre extérieur d'un câble blindé à isolant minéral ( 12).

4. Element sensible à la température selon la revendication 2 ou 3, caractérisé par le fait que l'extrémité encastrée du ou des câbles blindés à isolant minéral (12) est scellée dans l'alésage profond (19) du mandrin allongé ( 18).

5. Element sensible à la température selon l'une des revendications 1 à 4, caractérisé par le fait que le ou chaque câble blindé à isolant minéral (12) est essentiellement constitué par une gaine métallique (21) renfermant un isolant (22), tel que la magnésie ou l'alumine, dans lequel sont noyés le ou les fils de raccordement (3) associés.

6. Element sensible à la température selon la revendication 5, caractérisé par le fait que la gaine (21) du ou de chaque câble blindé à isolant minéral (12) est en métal ou en un alliage métallique dont le coefficient de dilatation à la température est proche de celui de la céramique constituant le mandrin allongé (18) et également proche de celui du revêtement isolant ( 14).

7. Sonde de mesure (100) comportant un élément sensible à la température ( 10) selon l'une quelconque des revendications précédentes, caractérisée par le fait qu'elle présente un corps principal (101) à extension tubulaire ajourée (102), ledit corps supportant l'élément sensible à la température (10) par une entretoise (104) traversée par le ou les câbles blindés à isolant minéral (12) dudit élément, le bobinage bifilaire enrobé étant disposé dans ladite extension tubulaire ajourée.

8. Sonde de mesure selon la revendication 7, caractérisée par le fait qu'elle comporte en outre deux patins élastiques de centrage (106, 109) assurant le maintien de la portion (11) de l'élément sensible à la température qui est disposée dans l'extension tubulaire ajourée (102), dont un premier patin (106), traversé par le ou les câbles blindés à isolant minéral (12) et interposé entre l'entretoise (104) et l'extrémité adjacente du revêtement isolant de ladite portion, et un deuxième patin (109) interposé entre l'autre extrémité dudit revêtement isolant et le fond ( 110) de ladite extension tubulaire.

9. Sonde de mesure selon la revendication 8, caractérisée par le fait qu'un jeu ( 112) est ménagé pour le passage du ou des câbles blindés à isolant minéral (12) dans le premier patin (106), afin de permettre un certain débattement en flexion de l'élément sensible à la température (10).

10. Sonde de mesure selon la revendication 8 ou 9, caractérisée par le fait que le corps principal ( 101 ) présente un alésage central ( 113) prolongeant celui de l'extension tubulaire ajourée ( 102), ledit alésage recevant l'entretoise (104) et le premier patin de centrage (106).

11. Sonde de mesure selon l'une des revendications 8 à 10, caractérisée par le fait qu'une liaison hermétique rigide ( 115, 116), de préférence par brasure, est prévue d'une part entre l'entretoise (104) et la gaine du ou des câbles blindés à isolant minéral (12), et d'autre part entre ladite entretoise et le corps principal (101).

12. Sonde de mesure selon l'une des revendications 8 à 11, caractérisée par le fait que l'entretoise (104) est métallique, alors que les patins élastiques de centrage (106, 109) sont en matière plastique, par exemple en polytétrafluoréthylène.

13. Sonde de mesure selon l'une des revendications 10 à 12, caractérisée par le fait que l'alésage central ( 113) débouche, du côté opposé à l'extension tubulaire ajourée (102), dans une chambré (117) recevant les extrémités (3′) des fils de raccordement (3), ladite chambre étant obturée de façon étanche par un connecteur hermétique (118) auquel sont raccordées lesdites extrémités.

14. Sonde de mesure selon la revendication 13, caractérisée par le fait que la chambre (117) du corps principal reçoit un compound dans lequel sont noyées les brasures (120) assurant la jonction des extrémités (3′) des fils de raccordement.

## Patentansprüche

1. Temperaturempfindliches Element mit einer langgestreckten Hülse (18) aus einem keramischen Material, in der in Längsrichtung wenigstens zwei nicht isolierte Verbindungsdrähte (3) verlaufen, die mit einer zweidrähtigen Spule (13) verbunden sind, die auf die Außenfläche der Hülse (18) gewickelt ist, und mit einem isolierenden Mantel (14) aus Glas, der die langgestreckte Hülse (18) und deren zweidrähtige Spule (13) umgibt, dadurch gekennzeichnet, daß es wenigstens ein geschirmtes Kabel (12) aus einem isolierenden Mineralstoff aufweist, dessen eines Ende in die langgestreckte Hülse (18) eingesetzt ist und in dem oder in denen die Verbindungsdrähte (3) verlaufen, und daß der isolierende Mantel (14) gleichfalls den Bereich des geschirmten Kabels oder der geschirmten Kabel (12) aus einem isolierenden Mineralstoff überdeckt, der sich unmittelbar an den Einsetzbereich in die langgestreckte Hülse (18) anschließt.

2. Temperaturempfindliches Element nach Anspruch 1, dadurch gekennzeichnet, daß die langgestreckte Hülse (18) aus einem keramischen Material wenigstens eine große Bohrung (19) zum Einsetzen des geschirmten Kabels oder der geschirmten Kabel (12) aus einem isolierenden Mineralstoff aufweist.

3. Temperaturempfindliches Element nach Anspruch 2, dadurch gekennzeichnet, daß die Länge der großen Bohrung (19) der langgestreckten Hülse (18) wenigstens gleich dem Zweifachen des Außendurchmessers eines geschirmten Kabels (12) aus einem isolierenden Mineralstoff ist.

4. Temperaturempfindliches Element nach Anspruch 2 oder 3, dadurch gekennzeichnet, daß das eingesetzte Ende des geschirmten Kabels oder der geschirmten Kabel (12) aus einem isolierenden Mineralstoff in die große Bohrung (19) der langgestreckten Hülse (18) eingegossen ist.

5. Temperaturempfindliches Element nach einem der Ansprüche 1 bis 4, dadurch gekennzeichnet, daß das geschirmte Kabel oder jedes geschirmte Kabel (12) aus einem isolierenden Mineralstoff im wesentlichen aus einer Metallhülle (21) besteht, die einen Isolierstoff (22) wie beispielsweise Magnesiumoxid oder Aluminiumoxid enthält, in den der zugehörige Verbindungsdraht oder die zugehörigen Verbindungsdrähte (3) eingebettet sind.

6. Temperaturempfindliches Element nach Anspruch 5, dadurch gekennzeichnet, daß die Hülle (21) des geschirmten Kabels (12) aus einem isolierenden Mineralstoff aus einem Metall oder einer Metallegierung besteht, dessen oder deren Temperaturausdehnungskoeffizient nahe an dem des keramischen Materials, aus dem die langgestreckte Hülse (18) besteht, und gleichfalls nahe an dem des isolierenden Mantels (14) liegt.

7. Meßsonde (100) mit einem temperaturempfindlichen Element (10) nach einem der vorhergehenden Ansprüche, dadurch gekennzeichnet, daß er einen Hauptkörper (101) mit einer rohrförmigen durchbrochenen Verlängerung (102) aufweist, welcher Körper das temperaturempfindliche Element (10) über ein Zwischenrohr (104) hält, durch das das geschirmte Kabel oder die geschirmten Kabel (12) aus einem isolierenden Mineralstoff des Elementes gehen, wobei die zweidrahtige ummantelte Spule in der rohrförmigen durchbrochenen Verlängerung angeordnet ist.

8. Meßsonde nach Anspruch 7, dadurch gekennzeichnet, daß sie weiterhin zwei elastische Zentrierungsschuhe (106, 109) aufweist, die den Teil (11) des temperaturempfindlichen Elementes halten, der sich in der durchbrochenen rohrförmigen Verlängerung (102) befindet, wobei ein erster Schuh (106) durch den das geschirmte Kabel oder die geschirmten Kabel (12) aus einem isolierenden Mineralstoff (12) geht oder gehen zwischen dem Zwischenrohr (104) und dem benachbarten Ende des isolierenden Mantels dieses Teils angeordnet ist und ein zweiter Schuh (109) zwischen dem anderen Ende des isolierenden Mantels und dem Boden (110) der rohrförmigen Verlängerung angeordnet ist.

9. Meßsonde nach Anspruch 8, dadurch gekennzeichnet, daß ein Zwischenraum (112) zum Durchgang des geschirmten Kabels oder der geschirmten Kabel (12) aus einem isolierenden Materialstoff in dem ersten Schuh (106) ausgespart ist, um eine gewisse Durchbiegung des temperaturempfindlichen Elementes (10) zu ermöglichen.

10. Meßsonde nach Anspruch 8 oder 9, dadurch gekennzeichnet, daß der Hauptkörper (101) eine zentrale Bohrung (113) aufweist, die sich an die Bohrung der rohrförmigen durchbrochenen Verlängerung (102) anschließt, wobei diese Bohrung das Zwischenrohr (104) und den ersten Zentrierungsschuh (106) aufnimmt.

11. Meßsonde nach einem der Ansprüche 8 bis 10, dadurch gekennzeichnet, daß eine hermetisch feste Verbindung (115, 116) vorzugsweise durch Löten an einem Teil zwischen dem Zwischenrohr (104) und der Hülle des geschirmten Kabels oder der geschirmten Kabel (12) aus einem isolierenden Mineralstoff einerseits und zwischen dem Zwischenrohr und dem Hauptkörper (101) andererseits vorgesehen ist.

12. Meßsonde nach einem der Ansprüche 8 bis 11, dadurch gekennzeichnet, daß das Zwischenrohr (104) aus einem Metall besteht, während die elastischen Zentrierungsschuhe (106, 109) aus einem Kunststoffmaterial, beispielsweise aus Polytetrafluorethylen bestehen.

13. Meßsonde nach einem der Ansprüch 10 bis 12, dadurch gekennzeichnet, daß die zentrale Bohrung (113) an der der durchbrochenen rohrförmigen Verlängerung (102) gegenüberliegenden Seite in eine Kammer (117) mündet, in der die Enden (3′) der Verbindungsdrähte (3) aufgenommen sind, welche Kammer durch ein dichtes Verbindungsstück (118) dicht verschlossen ist, mit dem diese Enden verbunden sind.

14. Meßsonde nach Anspruch 13, dadurch gekennzeichnet, daß die Kammer (117) des Hauptkörpers eine Vergußmasse enthält, in die die Lötstellen (120) eingebettet sind, die die Verbindung der Enden (3′) der Verbindungsdrähte herstellen.

## Claims

1. A temperature-sensitive element including an elongate ceramic mandrel (18) having at least two non-insulated connection wires (3) passing longitudinally therealong, which wires are connected to a bifilar winding (13) wound over the outside surface of said mandrel (18), and an insulated coating of glass (14) surrounding the elongate mandrel (18) and its bifilar winding (13), the temperature-sensitive element being characterized by the fact that it includes at least one mineral-insulated screened cable (12) having one end received inside the elongate mandrel (18), with the connection wires (3) passing along the cable(s), and by the fact that the insulating covering (14) also covers that zone of the mineral-insulated screened cable(s) (12) which is immediately adjacent to the point where the cable(s) penetrates into said elongate mandrel (18).

2. A temperature-sensitive element according to claim 1, characterized by the fact that the elongate ceramic mandrel (18) has at least one deep bore (19) for receiving the mineral-insulated screened cable(s) (12).

3. A temperature-sensitive element according to claim 2, characterized by the fact that the depth of the deep bore (19) in the elongate mandrel (18) is not less than twice the outside diameter of a mineral-insulated screened cable (12).

4. A temperature-sensitive element according to claim 2 or 3, characterized by the fact that the end(s) of the mineral-insulated screened cable(s) (12) received in the deep bore (19) in the elongate mandrel (18) is/are sealed therein.

5. A temperature-sensitive element according to any one of claims 1 to 4, characterized by the fact that the, or each, mineral-insulated screened cable (12) is essentially constituted by a metal sheath (21) enclosing insulation (22) such as magnesia or alumina, with the associated connection wire(s) (3) being embedded therein.

6. A temperature-sensitive element according to claim 5, characterized by the fact that the sheath (21) of the, or each, mineral-insulated screened cable (12) is made of a metal or a metal alloy having a thermal expansion coefficient close to that of the ceramic constituting the elongate mandrel (18) and also close to that of the insulating coating (14).

7. A measurement probe (100) including a temperature-sensitive element (10) according to any preceding claim, characterized by the fact that it has a main body (101) with a perforated tubular extension (102), said body supporting the temperature-sensitive element (10) by a spacer (104) through which the, or each, mineral insulated screened cable (12) of the said element passes, the coated bifilar winding being disposed inside said perforated tubular extension.

8. A measurement probe according to claim 7, characterized by the fact that it further includes two resilient centering pads (106, 109) for holding the portion (11) of the temperature-sensitive element disposed inside the perforated tubular extension (102), with a first one of said pads (106) having the, or each, mineral insulated screened cable (12) passing therethrough being disposed between the spacer (104) and the adjacent end of the insulating coating of said portion, and with a second one of said pads (109) being interposed between the other end of said insulating coating and the end (110) of said tubular extension.

9. A measurement probe according to claim 8, characterized by the fact that clearance (112) is provided where the mineral insulated screened cable(s) (12) passes through the first pad (106) in order to allow the temperature sensitive element (10) a degree of freedom in bending.

10. A measurement probe according to claim 8 or 9, characterized by the fact that the main body (101) has a central bore (113) extending the bore of the perforated tubular extension (102), said bore receiving the spacer (104) and the first centering pad (106).

11. A measurement probe according to any one of claims 8 to 10, characterized by the fact that a rigid sealed connection (115, 116) preferably provided by brazing or soldering is provided between the spacer (104) and the screening of the mineral insulated screened cable(s) (12), and between the said spacer and the main body (101).

12. A measurement probe according to any one of claims 8 to 11, characterized by the fact that the spacer (104) is made of metal, whereas the resilient centering pads (106, 109) are made of plastic, e.g. polytetrafluoroethylene.

13. A measurement probe according to any one of claims 10 to 12, characterized by the fact that the central bore (113) of the main body opens out at its end furthest from the perforated tubular extension (102) in a chamber (117) which receives the ends (3′) of the connection wires (3), said chamber being closed in sealed manner by a sealed connector (118) to which the said ends are connected.

14. A measurement probe according to claim 13, characterized by the fact that the chamber (117) of the main body receives a compound in which the connections (120) at the ends (3′) of the connection wires are embedded.
